# EUROPÄISCHE PATENTSCHRIFT

(11) **EP 0 902 062 B1**
(45) Veröffentlichungstag und Bekanntmachung des Hinweises auf die Patenterteilung: **06.08.2003**
(21) Anmeldenummer: 98116370.2
(22) Anmeldetag: 28.08.1998
(51) Int. Cl.: C09D 5/18

(54) **Tropenfeste Intumeszenz-Beschichtung**
Tropical climate stabilised intumescent coating
Revêtement intumescent stable en climat tropical

(30) Priorität: 11.09.1997 DE 19739730; 06.08.1998 DE 19835463
(43) Veröffentlichungstag der Anmeldung: 17.03.1999
(73) Patentinhaber: Clariant GmbH, 65929 Frankfurt am Main (DE)
(72) Erfinder: Pirig, Wolf-Dieter, 53879 Euskirchen (DE); Rothkamp, Susanne, 50374 Erftstadt-Liblar (DE); Thewes, Volker, Dipl.-Ing., 40789 Monheim (DE)

(56) Entgegenhaltungen:
- DE-A- 4 343 668
- GB-A- 1 476 238
- GB-A- 2 246 136
- US-A- 5 356 568

## Beschreibung

Die Erfindung betrifft eine dämmschichtbildende Brandschutzbeschichtung auf Basis von im Brandfall schaumschichtbildenden und kohlenstoffbildenden Substanzen, filmbildenden Bindemitteln, Treibmitteln und üblichen Hilfs- und Zusatzstoffen.

Dämmschichtbildende Brandschutzbeschichtungen, auch Intumeszenzbeschichtungen genannt, zeichnen sich dadurch aus, daß sie im Brandfall unter entsprechender Temperatureinwirkung aufschäumen und durch dieses Aufschäumen der vorgenannten Brandschutzbeschichtung der Wärmedurchtritt auf Stahlkonstruktionen, Decken, Wände, Kabel, Rohre und dergleichen verhindert oder zumindest behindert wird.

Die US 4,965,296 A1 beschreibt ein flammhemmendes Material, das sich aus einem flammhemmenden Beschichtungsmaterial und einem elektrisch leitfähigen Material zusammensetzt. Das flammhemmende Beschichtungsmaterial besteht dabei aus schaum- und kohlenstoffbildenden Substanzen, einer gaserzeugenden Verbindung, einem filmbildenden Bindemittel und entsprechenden Lösemitteln. Fakultativ können übliche, weitere Inhaltsstoffe anwesend sein.

In der US 4,879,320 wird eine ähnliche flammhemmende Zusammensetzung beschrieben, der jedoch anstelle eines leitfähigen Materials ein keramisches Fasermaterial zugesetzt ist.

Die US 5,225,464 beschreibt eine wäßrige Intumeszenz-Formulierung auf Basis eines Reaktionsproduktes aus Phosphorsäure, Melamin und Monoammoniumphosphat, welche mit Pentaerythritol, chlorierten Kohelnwasserstoffen und weiteren Verbindungen, insbesondere Polyvinylacetat, ein verbessertes Intumeszenz-Beschichtungsmaterial liefern soll.

Zahlreiche intumeszierende Formulierungen sind aus dem "Fire Retardants Formulations Handbook" (Autor: Vijay Mohan Bhatnagar, 1972) bekannt.

Die DE 42 18 184 A1 beschreibt ein wäßriges Bindemittelgemisch, bestehend aus einer wäßrigen Lösung und/oder Dispersion einer Kombination aus a) mindestens einem in Gegenwart der Komponente b) in Wasser löslichen und/oder dispergierbaren, Urethangruppen aufweisenden NCO-Vorpolymer mit blockierten Isocyanatgruppen und b) einer Polyamin-Komponente, bestehend aus mindestens einem (cyclo)aliphatischen Polyamin mit mindestens zwei primären und/oder sekundären Aminogruppen.

Die DE 43 43 668 schließlich beschreibt aufblähbare, flammhemmende Überzugsmassen, bestehend mindestens aus

| | |
|---|---|
| 4 bis 25 Gewichts-% | eines filmbildenden Bindemittels, |
| 10 bis 4 Gewichts-% | Ammoniumpolyphosphat, |
| 8 bis 40 Gewichts-% | mindestens einer bei Hitzeeinwirkung carbonisierenden Substanz, |
| 6 bis 25 Gewichts-% | eines Treibmittels, |
| 0 bis 5. Gewichts-% | Dispergiermittel, |
| 0 bis 25 Gewichts-% | Füllstoffe. |

Nachteilig bei den vorgennanten Brandschutzbeschichtungen ist insgesamt, daß sie halogenhaltig sind oder aber keine ausreichende Anwendungsbandbreite aufweisen.

Insbsondere wurde bei Formulierungen, die Melamin als Treibmittel enthalten, festgestellt, daß diese Kombinationen bei erhöhter Temperatur und erhöhter Luftfeuchtigkeit, also etwa bei tropischen Bedingungen, größere Mengen an Ammoniak (NH₃) freisetzen.

Es ist daher Aufgabe der vorliegenden Erfindung, dämmschichtbildende Brandschutzbeschichtungen zur Verfügung zu stellen, die auch unter klimatischen Bedingungen, wie sie etwa in den Tropen vorkommen, nur sehr geringe Mengen an NH₃ - auch bei erhöhter Luftfeuchtigkeit und erhöhter Temperatur - freisetzen.

Diese Aufgabe wird gelöst durch eine dämmschichtbildende Brandschutzbeschichtung der eingang beschriebenen Art, dadurch gekennzeichnet, daß sie als Treibmittel ein Melaminsalz und/oder Guanidinsalze und/oder mikroverkapseltes Melamin enthält.

Bevorzugt handelt es sich bei den Melaminsalzen um Melaminphoshat, Melamincyanurat, Melaminborat, Melaminsilikat und bei dem Guanidinsalz um Guanidinphosphat.

Ebenfalls ist, wie erwähnt, erfindungsgemäß mikroverkapseltes Melamin geeignet.

Bevorzugt enthält die dämmschichtbildende Brandschutzbeschichtung

| | |
|---|---|
| 5 bis 30 Gewichtsteile | filmbildendes Bindemittel, |
| 15 bis 50 Gewichtsteile | schaumschichtbildende Substanz, |
| 5 bis 25 Gewichtsteile | einer kohlenstoffbildenden Substanz, |
| 5 bis 50 Gewichtsteile | des Melaminsalzes und/oder des Guanidinsalzes und |
| 10 bis 50 Gewichtsteile | an üblichen Hilfs- und Zusatzstoffen. |

Besonders bevorzugt enthält die dämmschichtbildende Brandschutzbeschichtung

| | |
|---|---|
| 10 bis 20 Gewichtsteile | filmbildendes Bindemittel, |
| 25 bis 40 Gewichtsteile | schaumschichtbildende Substanz, |
| 7 bis 15 Gewichtsteile | einer kohlenstoffbildenden Substanz, |
| 7 bis 40 Gewichtsteile | des Melaminsalzes und/oder des Guanidinsalzes und |
| 20 bis 40 Gewichtsteile | an üblichen Hilfs- und Zusatzstoffen. |

Bevorzugt enthält die dämmschichtbildende Brandschutzbeschichtung als filmbildende Bindemittel
Homopolymerisate auf Basis Vinylacetat,
Copolymerisate auf Basis Vinylacetat, Ethylen und Vinylchlorid,
Copolymerisate auf Basis Vinylacetat und dem Vinylester einer langkettigen, verzweigten Carbonsäure,
Copolymerisate auf Basis Vinylacetat und Maleinsäure-di-n-Butylester,
Copolymerisate auf Basis Vinylacetat und Acrylsäureester,
Copolymerisate auf Basis Styrol und Acrylsäureester und/oder
Copolymerisate auf Basis Acrylsäureester,
Vinyltoluol/Acrylat-Copolymer,
Styrol/Acrylat-Polymer.

Bevorzugt enthält die dämmschichtbildende Brandschutzbeschichtung als schaumbildende Substanzen Ammoniumsalze von Phosphorsäuren und/oder Polyphosphorsäuren.

Bevorzugt enthält die dämmschichtbildende Brandschutzbeschichtung als kohlenstoffbildende Substanzen Kohlenhydrate.

Bevorzugt werden als Kohlenhydrate Pentaerythrit, Dipentaerythrit, Tripentaerythrit und/oder Polykondensate des Pentaerythrits eingesetzt.

Bevorzugt enthält die dämmschichtbildende Brandschutzbeschichtung als Hilfs- und Zusatzstoffe Glasfasern, Mineralfasern, Kaolin, Talkum, Aluminiumoxid, Aluminiumhydroxid, Magnesiumhydroxid, Fällungskieselsäuren, Silikate und/oder pulverisierte Cellulosen.

Bevorzugt ist die dämmschichtbildende Brandschutzbeschichtung gemäß der Erfindung halogenfrei.

Die erfindungsgemäße dämmschichtbildende Brandschutzbeschichtung setzt bei Lagerung unter erhöhter (Luft)feuchtigkeit (bis zu 100 % rel. Feuchte) und erhöhter Temperatur (ca. 75 °C) weniger als 550 ppm NH₃ frei.

Die erfindungsgemäße Brandschutzbeschichtung (Intumeszenzbeschichtung) gelangt in Form eines streich-, spritz- oder rollfähigen Anstrichmittels zum Schutz von unterschiedlichsten Untergründen, vorzugsweise von Stahl, Holz, Elektrokabeln und Rohren, zum Einsatz.

In den folgenden Beispielen wurden Intumeszenzbeschichtungen hergestellt, auf Normstahlplatten aufgetragen und ihre Wirksamkeit ermittelt. Die Prüfung der Isolierfähigkeit erfolgte nach DIN 4102, Teil 8 (1986). Die Wasserfestigkeit wurde geprüft, indem die beschichteten Normstahlplatten vor der Prüfung der Isolierfähigkeit im Klimaschrank bei 40 °C und 95 %iger Luftfeuchtigkeit über 4 Wochen gelagert wurden.

In den Beispielen wurden folgende Produkte eingesetzt:

### ® Pliolite (Solid) (Goodyear/Frankreich)

Es handelt sich um ein newtonisches, thermoplastisches Harz auf Basis von Vinyltoluol/Acrylat-Copolymere.

### ® Hostaflam AP 462 (Clariant GmbH, Frankfurt am Main)

Es handelt sich um ein mikroverkapseltes Ammoniumpolyphosphat auf Basis ® Hostaflam AP 422, das nach dem Verfahren der EP-B-0 180 795 hergestellt wurde und etwa 10 Masse% Kapselmaterial, bestehend aus einem gehärteten Melamin/Formaldehyd-Harz, enthält.

Bei ® Hostaflam AP 422 (Hoechst AG, Frankfurt am Main) handelt es sich um ein freifließendes, pulverförmiges, in Wasser schwer lösliches Ammoniumpolyphosphat der Formel (NH₄PO₃) mit n = 20 bis 1000, insbesondere 500 bis 1000. Der Anteil der Teilchen mit einer Teilchengröße kleiner 45 um beträgt mehr als 99 %.

### Beispiel 1 (Vergleich)

Es wurden die folgenden Substanzen nacheinander vermischt und anschließend entsprechend auf die zu prüfende Platte aufgetragen:

| | |
|---|---|
| 38 Gewichtsteile | ® Hostaflam AP 462 |
| 10 Gewichtsteile | ® Pliolite (Solid) |
| 8 Gewichtsteile | Melamin |
| 8 Gewichtsteile | Dipentaerythrit |
| 8 Gewichtsteile | Titandioxid |
| ad 100 Gewichtsteile | Verdicker, Weichmacher, Lösungsmittel. |

Die Brandprüfung der beschichteten Platte gemäß DIN 4102 ergab die Brandklasse F 30. Nach der Lagerung im Klimaschrank ergab die Brandklasse ebenfalls F 30.

### Beispiel 2 (Erfindung)

Es wurden die folgenden Substanzen nacheinander vermischt und anschließend entsprechend auf die zu prüfende Platte aufgetragen:

| | |
|---|---|
| 38 Gewichtsteile | ® Hostaflam AP 462 |
| 10 Gewichtsteile | ® Pliolite (Solid) |
| 22 Gewichtsteile | Melaminphosphat |
| 8 Gewichtsteile | Dipentaerythrit |
| 8 Gewichtsteile | Titandioxid |
| ad 100 Gewichtsteile | Verdicker, Weichmacher, Lösungsmittel. |

### Beispiel 3 (Erfindung)

Es wurden die folgenden Substanzen nacheinander vermischt und anschließend entsprechend auf die zu prüfende Platte aufgetragen:

| | |
|---|---|
| 38 Gewichtsteile | ® Hostaflam AP 462 |
| 10 Gewichtsteile | ® Pliolite (Solid) |
| 16 Gewichtsteile | Melamincyanurat |
| 8 Gewichtsteile | Dipentaerythrit |
| 8 Gewichtsteile | Titandioxid |
| ad 100 Gewichtsteile | Verdicker, Weichmacher, Lösungsmittel. |

### Beispiel 4 (Erfindung)

Es wurden die folgenden Substanzen nacheinander vermischt und anschließend entsprechend auf die zu prüfende Platte aufgetragen:

| | |
|---|---|
| 38 Gewichtsteile | ® Hostaflam AP 462 |
| 10 Gewichtsteile | ® Pliolite (Solid) |
| 12 Gewichtsteile | Melaminborat |
| 8 Gewichtsteile | Dipentaerythrit |
| 8 Gewichtsteile | Titandioxid |
| ad 100 Gewichtsteile | Verdicker, Weichmacher, Lösungsmittel. |

### Beispiel 5 (Erfindung)

Es wurden die folgenden Substanzen nacheinander vermischt und anschließend entsprechend auf die zu prüfende Platte aufgetragen:

| | |
|---|---|
| 38 Gewichtsteile | ® Hostaflam AP 462 |
| 10 Gewichtsteile | ® Pliolite (Solid) |
| 21 Gewichtsteile | Melaminsilikat |
| 8 Gewichtsteile | Dipentaerythrit |
| 8 Gewichtsteile | Titandioxid |
| ad 100 Gewichtsteile | Verdicker, Weichmacher, Lösungsmittel. |

### Beispiel 6 (Erfindung)

Es wurden die folgenden Substanzen nacheinander vermischt und anschließend entsprechend auf die zu prüfende Platte aufgetragen:

| | |
|---|---|
| 38 Gewichtsteile | ® Hostaflam AP 462 |
| 10 Gewichtsteile | ® Pliolite (Solid) |
| 10 Gewichtsteile | Guanidinphosphat |
| 8 Gewichtsteile | Dipentaerythrit |
| 8 Gewichtsteile | Titandioxid |
| ad 100 Gewichtsteile | Verdicker, Weichmacher, Lösungsmittel. |

### Beispiel 7 (Erfindung)

Es wurden die folgenden Substanzen nacheinander vermischt und anschließend entsprechend auf die zu prüfende Platte aufgetragen:

| | |
|---|---|
| 27 Gewichtsteile | ® Hostaflam AP 422 |
| 20 Gewichtsteile | ® Mowilith DM 510 |
| 39 Gewichtsteile | Melaminphosphat |
| 13 Gewichtsteile | Dipentaerythrit |
| 5 Gewichtsteile | Titandioxid |
| 20 Gewichtsteile | Verdicker, Weichmacher, Wasser. |

### Beispiel 8 (Erfindung)

Es wurden die folgenden Substanzen nacheinander vermischt und anschließend entsprechend auf die zu prüfende Platte aufgetragen:

| | |
|---|---|
| 27 Gewichtsteile | ® Hostaflam AP 422 |
| 20 Gewichtsteile | ® Mowilith DM 510 |
| 18 Gewichtsteile | Melamin mikroverkapselt |
| 13 Gewichtsteile | Dipentaerythrit |
| 8 Gewichtsteile | Titandioxid |
| ad 100 Gewichtsteile | Verdicker, Weichmacher, Lösungsmittel. |

### Beispiel 9 (Erfindung)

Es wurden die folgenden Substanzen nacheinander vermischt und anschließend entsprechend auf die zu prüfende Platte aufgetragen:

| | |
|---|---|
| 38 Gewichtsteile | ® Hostaflam AP 462 |
| 10 Gewichtsteile | ® Pliolite (Solid) |
| 8 Gewichtsteile | Melamin mikroverkapselt |
| 8 Gewichtsteile | Dipentaerythrit |
| 8 Gewichtsteile | Titandioxid |
| ad 100 Gewichtsteile | Verdicker, Weichmacher, Lösungsmittel. |

Alle zu prüfenden Platten der Beispiele 2 bis 9 erreichten die Brandklasse F 30.

### Messung der NH₃-Emission

Zur Feststellung der NH₃-Freisetzung werden die getrockneten Probenplatten in ein geschlossenes Glassystem gegeben. Dieses besteht aus einer 500 ml-Glasflasche und einem Glasdeckel mit 2 Hähnen. Zur Simulation der Luftfeuchtigkeit (ca. 100 % rel. Feuchte) befindet sich in dem Glassystem eine Glaswanne mit 10 ml Leitungswasser. Das Glassystem wird mit einem geschlossenen Hahn bei 75 °C in einen Umlufttrockenschrank gestellt. Der zweite Hahn wird nach 10 Minuten im Trockenschrank ebenfalls geschlossen. Die Verweildauer der Flasche im Trockenschrank beträgt von da ab 120 Minuten. Danach wird die Flasche aus dem Trockenschrank genommen und ein Hahn mittels eines Zwischenstückes mit einem Dräger- Röhrchen versehen. An den zweiten Hahn wird Stickstoff in einer Geschwindigkeit von 5 l pro Stunde angelegt. Die Flasche wird 30 Minuten ausgeblasen und die freigesetzten Ammoniak-Mengen werden direkt am Dräger-Röhrchen abgelesen.

Die Ergebnisse der vorgenannten Messung finden sich in Abb. 1, aus der hervorgeht, daß die erfindungsgemäßen dämmschichtbildende Brandschutzbeschichtung der Beispeile 2 bis 7 weit weniger (etwa 8 bis 20 mal weniger) NH₃ freisetzen als die Brandschutzbeschichtung nach dem Stand der Technik (Beispiel 1).

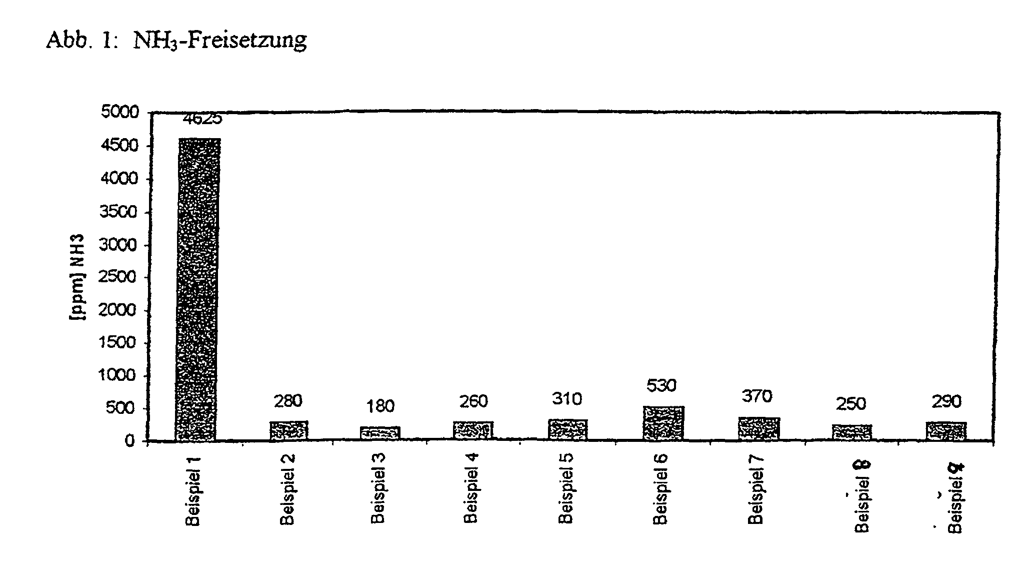

## Patentansprüche

1. Dämmschichtbildende Brandschutzbeschichtung auf Basis von im Brandfall schaumschichtbildenden und kohlenstoffbildenden Substanzen, filmbildenden Bindemitteln, Treibmitteln und üblichen Hilfs- und Zusatzstoffen, **dadurch gekennzeichnet, daß** sie
| | |
|---|---|
| 5 bis 30 Gewichtsteile | filmbildendes Bindemittel, |
| 5 bis 50 Gewichtsteile | schaumschichtbildende Substanz |
| 5 bis 25 Gewichtsteile | einer kohlenstoffbildenden Substanz, |
| 5 bis 50 Gewichtsteile | Melaminsalz und/oder Guanidinsalz und/oder mikroverkapseltes Melamin, |
| 10 bis 50 Gewichtsteile | an üblichen Hilfs- und Zusatzstoffen |
enthält.

2. Dämmschichtbildende Brandschutzbeschichtung nach Anspruch 1, **dadurch gekennzeichnet, daß** es sich bei den Melaminsalzen um Melaminphosphat, Melamincyanurat, Melaminborat, Melaminsilikat und bei dem Guanidinsalz um Guanidinphosphat handelt.

3. Dämmschichtbildende Brandschutzbeschichtung nach Anspruch 1 oder 2, **dadurch gekennzeichnet, daß** sie
| | |
|---|---|
| 10 bis 20 Gewichtsteile | filmbildendes Bindemittel, |
| 25 bis 40 Gewichtsteile | schaumschichtbildende Substanz |
| 7 bis 15 Gewichtsteile | einer kohlenstoffbildenden Substanz, |
| 7 bis 40 Gewichtsteile | Melaminsalz und/oder Guanidinsalz und/oder mikroverkapseltes Melamin, |
| 20 bis 40 Gewichtsteile | an üblichen Hilfs- und Zusatzstoffen |
enthält.

4. Dämmschichtbildende Brandschutzbeschichtung nach einem oder mehreren der Ansprüche 1 bis 3, **dadurch gekennzeichnet, daß** als filmbildende Bindemittel Homopolymerisate auf Basis Vinylacetat,
Copolymerisate auf Basis Vinylacetat, Ethylen und Vinylchlorid,
Copolymerisate auf Basis Vinylacetat und dem Vinylester einer langkettigen, verzweigten Carbonsäure,
Copolymerisate auf Basis Vinylacetat und Maleinsäure-di-n-Butylester,
Copolymerisate auf Basis Vinylacetat und Acrylsäureester,
Copolymerisate auf Basis Styrol und Acrylsäureester und/oder
Copolymerisate auf Basis Acrylsäureester,
Vinyltoluol/Acrylol-Copolymer,
Styrol/Acrylat-Polymere,
Vinyl/Acrylat-Copolymere,
Selbstvernetzende Polyurethan - Dispersionen
enthalten sind.

5. Dämmschichtbildende Brandschutzbeschichtung nach einem der Ansprüche 1 bis 4 **dadurch gekennzeichnet, daß** als schaumbildende Substanzen Ammoniumsalze von Phosphorsäuren und/oder Polyphosphorsäuren enthalten sind.

6. Dämmschichtbildende Brandschutzbeschichtung nach einem der Ansprüche 1 bis 5 **dadurch gekennzeichnet, daß** als kohlenstoffbildende Substanzen Kohlenhydrate enthalten sind.

7. Dämmschichtbildende Brandschutzbeschichtung nach Anspruch 6, **dadurch gekennzeichnet, daß** als Kohlenhydrate Pentaerythrit, Dipentaerythrit, Tripentaerythrit und/oder Polykondensate des Pentaerythrits eingesetzt werden.

8. Dämmschichtbildende Brandschutzbeschichtung nach einem der Ansprüche 1 bis 7, **dadurch gekennzeichnet, daß** als Hilfs- und Zusatzstoffe Glasfasern, Mineralfasern, Kaolin, Talkum, Aluminiumoxid, Aluminiumhydroxid, Magnesiumhydroxid, Fällungskieselsäuren, Silikate und/oder pulverische Cellulosen enthalten sind.

9. Dämmschichtbildende Brandschutzbeschichtung nach einem der Ansprüche 1 bis 8, **dadurch gekennzeichnet, daß** sie halogenfrei ist.

10. Dämmschichtbildende Brandschutzbeschichtung nach einem der Ansprüche 1 bis 9, **dadurch gekennzeichnet, daß** sie bei Lagerung unter erhöhter Feuchtigkeit bis zu 100 % rel. Feuchte und erhöhter Temperatur (ca. 75 °C) weniger als 550 ppm NH₃ freisetzt.

## Claims

1. A fireproof coating which forms an insulating layer and is based on carbon-forming substances forming a foam layer in the case of a fire, film-forming binders, blowing agents and conventional assistants and additives, which contains
| | |
|---|---|
| from 5 to 30 | parts by weight of a film-forming binder, |
| from 5 to 50 | parts by weight of a substance forming a foam layer, |
| from 5 to 25 | parts by weight of a carbon-forming substance, |
| from 5 to 50 | parts by weight of the melamine salt and/or of the guanidine salt and/or microencapsulated melamine, |
| from 10 to 50 | parts by weight of conventional assistants and additives. |

2. The fireproof coating forming an insulating layer, as claimed in claim 1, wherein the melamine salts are melamine phosphate, melamine cyanurate, melamine borate and melamine silicate and the guanidine salt is guanidine phosphate.

3. The fireproof coating forming an insulating layer, as claimed in claim 1 or 2, which contains
| | |
|---|---|
| from 10 to 20 | parts by weight of a film-forming binder, |
| from 25 to 40 | parts by weight of a substance forming a foam layer, |
| from 7 to 15 | parts by weight of a carbon-forming substance, |
| from 7 to 40 | parts by weight of the melamine salt and/or of the guanidine salt and/or microencapsulated melamine, |
| from 20 to 40 | parts by weight of conventional assistants and additives. |

4. The fireproof coating forming an insulating layer, as claimed in one or more of claims 1 to 3, which contains, as film-forming binders,
homopolymers based on vinyl acetate,
copolymers based on vinyl acetate, ethylene and vinyl chloride,
copolymers based on vinyl acetate and the vinyl ester of a long-chain, branched carboxylic acid,
copolymers based on vinyl acetate and di-n-butyl maleate,
copolymers based on vinyl acetate and acrylic esters,
copolymers based on styrene and acrylic esters and/or
copolymers based on acrylic esters,
vinyltoluene/acrylate copolymers,
styrene/acrylate polymers,
vinyl/acrylate copolymers, self-crosslinking polyurethane dispersions.

5. The fireproof coating forming an insulating layer as claimed in any of claims 1 to 4, wherein ammonium salts of phosphoric acids and/or polyphosphoric acids are present as foam-forming substances.

6. The fireproof coating forming an insulating layer, as claimed in any of claims 1 to 5, wherein carbohydrates are present as carbon-forming substances.

7. The fireproof coating forming an insulating layer, as claimed in claim 6, wherein the carbohydrates used are pentaerythritol, dipentaerythritol, tripentaerythritol and/or polycondensates of pentaerythritol.

8. The fireproof coating forming an insulating layer, as claimed in any of claims 1 to 7, wherein glass fibers, mineral fibers, kaolin, talc, alumina, aluminum hydroxide, magnesium hydroxide, precipitated silicas, silicates and/or powdered celluloses are present as assistants and additives.

9. The fireproof coating forming an insulating layer, as claimed in any of claims 1 to 8, which is halogen-free.

10. The fireproof coating forming an insulating layer, as claimed in any of claims 1 to 9, which coating releases less than 550 ppm of NH₃ on storage under high humidity up to 100% rel. humidity and at elevated temperature (about 75°C).

## Revendications

1. Revêtement ignifugeant formant une couche isolante à base de substances formant une couche de mousse et formant des hydrocarbures en cas d'incendie, d'agents filmogènes, d'agents moussants et d'adjuvants et d'additifs usuels, **caractérisé en ce qu'**il contient 5 à 30 parties en poids de liant filmogène,
5 à 50 parties en poids d'une substance formant une couche de mousse
5 à 25 parties en poids d'une substance formant des hydrocarbures,
5 à 50 parties en poids d'un sel de mélamine et/ou d'un sel de guanidine et/ou de mélamine micro-encapsulée,
10 à 50 parties en poids d'adjuvants et d'additifs usuels.

2. Revêtement ignifugeant formant une couche isolante selon la revendication 1, **caractérisé en ce qu'**il s'agit pour les sels de mélamine de phosphate de mélamine, cyanurate de mélamine, borate de mélamine, silicate de mélamine et pour le sel de guanidine de phosphate de guanidine.

3. Revêtement ignifugeant formant une couche isolante selon la revendication 1 ou 2, **caractérisé en ce qu'**il contient
10 à 20 parties en poids de liant filmogène,
25 à 40 parties en poids de substance formant une couche de mousse
7 à 15 parties en poids d'une substance formant des hydrocarbures,
7 à 40 parties en poids d'un sel de mélamine et/ou d'un sel de guanidine et/ou de mélamine micro-encapsulée,
20 à 40 parties en poids d'adjuvants et d'additifs usuels.

4. Revêtement ignifugeant formant une couche isolante selon une ou plusieurs des revendications 1 à 3, **caractérisé en ce qu'**il contient comme liants filmogènes
des homopolymérisats à base d'acétate de vinyle,
des copolymérisats à base d'acétate de vinyle, d'éthylène et de chlorure de vinyle,
des copolymérisats à base d'acétate de vinyle et de l'ester de vinyle d'un acide carboxylique ramifié à longue chaîne,
des copolymérisats à base d'acétate de vinyle et d'ester di-n-butylique d'acide maléique,
des copolymérisats à base d'acétate de vinyle et d'acrylate,
des copolymérisats à base de styrène et d'acrylate et/ou
des copolymérisats à base d'acrylate,
un copolymère vinyltoluène/acrylol,
des polymères styrène/acrylate,
des copolymères vinyle/acrylate,
des dispersions de polyuréthane autoréticulantes.

5. Revêtement ignifugeant formant une couche isolante selon l'une des revendications 1 à 4, **caractérisé en ce qu'**il contient comme substances formant de la mousse des sels d'ammonium d'acides phosphoriques et/ou d'acides polyphosphoriques.

6. Revêtement ignifugeant formant une couche isolante selon l'une des revendications 1 à 5, **caractérisé en ce qu'**il contient comme substances formant des hydrocarbures des hydrates de carbone.

7. Revêtement ignifugeant formant une couche isolante selon la revendication 6, **caractérisé en ce que** l'on utilise comme hydrates de carbone le pentaérythritol, le dipentaérythritol, le tripentaérythritol et/ou des polycondensats de pentaérythritol.

8. Revêtement ignifugeant formant une couche isolante selon l'une des revendications 1 à 7, **caractérisé en ce qu'**il contient comme adjuvants et additifs des fibres de verre, des fibres minérales, du kaolin, du talc, de l'oxyde d'aluminium, de l'hydroxyde d'aluminium, de l'hydroxyde de magnésium, des acides siliciques précipités, des silicates et/ou des celluloses pulvérisées.

9. Revêtement ignifugeant formant une couche isolante selon l'une des revendications 1 à 8, **caractérisé en ce qu'**il est exempt d'halogène.

10. Revêtement ignifugeant formant une couche isolante selon l'une des revendications 1 à 9, **caractérisé en ce qu'**il libère en stockage en augmentant l'humidité jusqu'à 100 % d'humidité relative et en augmentant la température (environ 75 °C) moins de 550 ppm NH₃.
